(19) Europäisches Patentamt
European Patent Office
Office européen des brevets

(11) **EP 4 130 170 A1**

(12) **EUROPEAN PATENT APPLICATION**
published in accordance with Art. 153(4) EPC

(43) Date of publication:
**08.02.2023 Bulletin 2023/06**

(21) Application number: **21777064.3**

(22) Date of filing: **12.03.2021**

(51) International Patent Classification (IPC):
*C09D 5/20* (1968.09)          *C09D 175/04* (1990.01)
*C09D 201/00* (1990.01)     *C09D 7/63* (2018.01)
*C09D 7/65* (2018.01)

(52) Cooperative Patent Classification (CPC):
**C09D 5/20; C09D 7/63; C09D 7/65; C09D 175/04;
C09D 201/00**

(86) International application number:
**PCT/JP2021/010232**

(87) International publication number:
**WO 2021/193169 (30.09.2021 Gazette 2021/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.03.2020 JP 2020053316**

(71) Applicant: **NITTO DENKO CORPORATION**
**Ibaraki-shi**
**Osaka 567-8680 (JP)**

(72) Inventors:
• **TAKENOUCHI Yuta**
  **Ibaraki-shi, Osaka 567-8680 (JP)**
• **IKENAGA Akie**
  **Ibaraki-shi, Osaka 567-8680 (JP)**
• **XIE Yijun**
  **Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

(54) **COMPOSITION FOR COATING-FILM FORMATION, AND COATING FILM**

(57)     The present invention relates to a composition for coating-film formation, which forms a coating film that, after the surface is rinsed with water, has a contact angle with water of 25° or less and that, after 2-hour immersion in 25°C water, has a water content of 110% or less.

*FIG.1*

**Description**

TECHNICAL FIELD

The present invention relates to a coating film forming composition and a coating film.

BACKGROUND ART

In the related art, a method of protecting the surface of a structure and a structural member with an antifouling coating film is used in order to prevent adhesion of dirt and scratches to the structure.

The antifouling coating film is required to be adhered to the structure until a predetermined timing to protect the surface, and to be easily peeled off if necessary. However, when repainting the antifouling coating film that has been used for many years, it is necessary to remove the old antifouling coating film. The work of removing the old antifouling coating film is a heavy labor and high cost work such as polishing of the antifouling coating film.

When an antifouling coating material of the related art is dried after coating, an organic solvent volatilizes and adversely affects the working environment and the surrounding environment.

Therefore, an antifouling coating film using an aqueous solvent that has a low environmental load has been studied. For example, Patent Literature 1 describes a method of temporarily protecting a surface of a cured coating film coated on an outer panel of an automobile by forming a coating film on the outer panel of the automobile with a peelable aqueous coating composition containing an aqueous acrylic-based resin and an ultraviolet absorber.

Patent Literature 2 describes a coating film which is formed by a coating material for forming a peelable coating film composed of an acrylic resin-based emulsion and a urethane resin-based emulsion and which can be easily peeled.

CITATION LIST

PATENT LITERATURE

Patent Literature 1: JP-A-H08-155383
Patent Literature 2: JP-A-H09-137087

SUMMARY OF INVENTION

TECHNICAL PROBLEM

Although a coating film formed by a composition containing an organic solvent has excellent water resistance, there is a concern that the volatile organic solvent may affect the human body. For example, there is a limit to use for articles, structures, and the like related to foods and medical products, and to use for buildings.

On the other hand, since the coating films described in Patent Literatures 1 and 2 use an aqueous solvent, dirt is difficult to be removed when adhering to the coating film. When the coating film of the related art is washed with water, the antifouling effect is weakened, the appearance is deteriorated due to swelling, and the like.

As a result of focusing on a water contact angle and a water content of the coating film, the present inventors have found that when the water contact angle after washing with water is low, the antifouling property is excellent, and when the water content is high, dirt is less likely to be removed, the antifouling property is reduced, and the appearance after washing with water is also inferior.

The present inventors have found that the above problems can be solved by setting the water contact angle after the formed coating film is washed with water and the water content within a specific range, and have completed the present invention.

The present invention has been completed in view of the above, and an object of the present invention is to provide a coating film forming composition capable of forming a coating film having excellent antifouling property and water resistance, and a coating film formed of the coating film forming composition.

SOLUTION TO PROBLEM

That is, the object of the present invention can be achieved by the following [1] to [11].

[1] A coating film forming composition, in which

a coating film formed by the coating film forming composition has a water contact angle, after a surface is washed with water, of 25° or less, and a water content, after impregnation with water at 25°C for 2 hours, of 110% or less.

[2] The coating film forming composition according to [1], in which the coating film is a peelable coating film.

[3] The coating film forming composition according to [1] or [2], including at least one resin selected from the group consisting of a urethane-based resin, an acrylic-based resin, a styrene-based resin, and a rubber-based resin.

[4] The coating film forming composition according to [3], further including a surfactant, a crosslinking agent, a peeling agent, or a film forming aid.

[5] The coating film forming composition according to [3], in which the composition comprises a urethane-based resin as the resin, and further comprises a surfactant or a crosslinking agent.

[6] The coating film forming composition according to [4] or [5], in which the surfactant has a molecular weight of 200 to 10000.

[7] The coating film forming composition according to any one of [4] to [6], including the resin and the surfactant, wherein a content of the surfactant is 0.1 part by mass to 10 parts by mass with respect to 100 parts by mass of the resin.

[8] The coating film forming composition according to any one of [1] to [7], in which an adhesive force of the coating film is 2.0 N/20 mm or more.

[9] The coating film forming composition according to any one of [1] to [8], in which the peeling index represented by the following formula (2a) in the coating film is 2.5 or more:

$$\text{Peeling index} = (\text{Strength at break (MPa)}) / \{\text{adhesive force (N)} / (\text{film thickness (mm)} \times \text{width (mm)})\} \qquad (2a).$$

[10] A coating film including the coating film forming composition according to any one of [1] to [9].

[11] A coating film having a water contact angle, after a surface is washed with water, of 25° or less, and having a water content, after impregnation with water at 25°C for 2 hours, of 110% or less.

ADVANTAGEOUS EFFECTS OF INVENTION

The coating film forming composition of the present invention can form a coating film excellent in antifouling property and water resistance.

BRIEF DESCRIPTION OF DRAWINGS

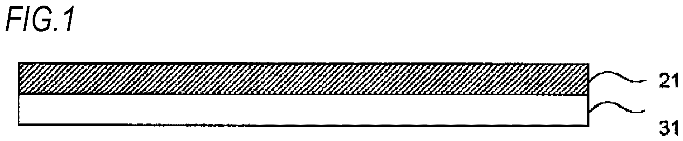

[FIG. 1] FIG. 1 is a cross-sectional view showing a structural member on which a coating film according to the present embodiment is formed.

DESCRIPTION OF EMBODIMENTS

Hereinafter, an embodiment of the present invention will be described in detail. In the present specification, a percentage or the like based on mass is synonymous with a percentage or the like based on weight.

<Coating Film Forming Composition>

A coating film formed by a coating film forming composition according to the embodiment of the present invention has a water contact angle, after a surface is washed with water, of 25° or less, and a water content, after impregnation with water at 25°C for 2 hours, of 110% or less.

The water contact angle after the surface of the coating film is washed with water (after washing) and the water content correlate with the antifouling effect. When the water contact angle on the surface of the coating film is small and the water content is low, dirt does not remain on the surface of the coating film and flows down, so that the antifouling effect is excellent.

The coating film formed by the coating film forming composition according to the embodiment of the present invention has a small water contact angle after the surface is washed with water and a low water content.

When the water contact angle on the surface of the coating film is small, that is, when the surface of the coating film is hydrophilic, dirt adhering to the surface of the coating film can be easily washed away with water, a self-cleaning effect is obtained, and thus the antifouling effect is enhanced.

Since the coating film according to the embodiment of the present invention is less likely to swell, the dirt is prevented from permeating the inside of the coating film even when dirt adheres to the coating film, and thus an excellent antifouling effect is exhibited. Furthermore, even after washing with water, deformation due to swelling is inhibited, and thus the appearance is excellent.

Therefore, the coating film according to the embodiment of the present invention exhibits an excellent antifouling effect even after water washing and has excellent water resistance, and the surface of the coating film can be washed with water or the like.

The water contact angle (wet water contact angle) of the coating film formed by the coating film forming composition according to the embodiment of the present invention after the surface is washed with water needs to be 25° or less, is preferably 20° or less, and more preferably 15° or less. The lower limit of the wet water contact angle is not particularly limited.

Here, the water contact angle after the surface is washed with water is a water contact angle measured 5 minutes after a coating film formed at room temperature (25°C) is immersed in water at 25°C for 5 minutes and then taken out from water, water droplets on the surface are wiped off, and then water droplets are dropped on the coating film under an atmosphere of 25°C × 50% RH.

The coating film formed by the coating film forming composition according to the embodiment of the present invention is not washed with water, and the water contact angle (dry water contact angle) in a dry state is preferably 20° or less, and more preferably 10° or less. The lower limit of the dry water contact angle is not particularly limited.

The dry water contact angle is a water contact angle measured 5 minutes after water droplets are dropped on a coating film formed at room temperature under an atmosphere of 25°C × 50% RH.

Specifically, the dry water contact angle and the wet water contact angle are measured by the following method.

(Dry Water Contact Angle (dry-WCA [°])

The coating film forming composition is applied to a surface of a PET film (product name "Lumirror S10", manufactured by Toray Industries, Inc.) having a thickness of 75 μm with an applicator to have a wet thickness of 250 μm, and dried at room temperature (25°C) for 12 hours, and the formed coating film is further dried at 35°C for 4 hours, thereby obtaining a sample for measurement. For the obtained sample for measurement, the contact angle of the surface of the coating film after a lapse of 5 minutes from dropping 2 μL of water on the surface of the coating film can be measured by a static drop method according to JIS R3257 using a contact angle mater (Drop Master, manufactured by Kyowa Interface Science Co., Ltd.).

(Wet Water Contact Angle (wet-WCA [°])

The coating film forming composition is applied to a surface of a PET film (product name "Lumirror S10", manufactured by Toray Industries, Inc.) having a thickness of 75 μm with an applicator to have a wet thickness of 250 μm, and dried at room temperature (25°C) for 12 hours, and the formed coating film is further dried at 35°C for 4 hours, thereby obtaining a sample piece. The water contact angle can be measured in the same manner as in the case of the dry water contact angle except that the obtained sample piece is impregnated with pure water for 5 minutes, then taken out, and wiped off with a waste cloth to obtain a sample for measurement.

The water content of the coating film formed by the coating film forming composition according to the embodiment of the present invention needs to be 110% or less, is preferably 108% or less, and more preferably 106% or less. The lower limit of the water content is not particularly limited. Here, the water content indicates a mass change rate when the initial mass (mass of the coating film before impregnation) is 100%.

In the present embodiment, the water content of the coating film can be calculated by the following formula (1a) by impregnating the coating film formed by the coating film forming composition under the condition of room temperature (25°C) with water at 25°C for 2 hours, and measuring the mass before and after the impregnation.

In the present embodiment, the water content of a peelable coating film can be used as an index of the swelling property. The swelling property and the durability of the coating film correlate with each other.

$$\text{Formula (1a): Water content (\%)} = [(\text{Mass after impregnation} - W_{PET})/(\text{mass before impregnation} - W_{PET})] \times 100$$

Specifically, the water content is measured by the following method.

(Measurement of Water Content)

The coating film forming composition is applied to the surface of a PET base film (product name "Lumirror S10", manufactured by Toray Industries, Inc.) having a thickness of 75 $\mu$m with an applicator, and dried at room temperature (25°C) for 12 hours so that the thickness after drying becomes 60 ± 10 $\mu$m. Further, after a sample is prepared by drying the coating film at 35°C for 4 hours, the obtained coating film is cut out so as to have a size of 20 mm × 20 mm, and the mass (mass before impregnation) is measured without being peeled from the PET base. The sample is put into a glass bottle containing pure water and allowed to stand (immersed) at room temperature for 2 hours. After 2 hours, the sample is taken out, water droplets adhering to the surface are quickly wiped off, and then the mass (mass after impregnation) is measured to determine the mass before and after impregnation. The mass ($W_{PET}$) of the PET base cut out so as to have a size of 20 mm × 20 mm is separately measured, and the water content can be calculated by the above formula (1a).

The water content and the water contact angle after the surface is washed with water of the coating film formed by the coating film forming composition according to the embodiment of the present invention can be adjusted depending on the composition of the coating film forming composition, for example, the type and content of a resin that can be contained, the type and content of a peeling agent or a film forming aid that can be used in combination with the resin, and the like.

The coating film formed by the coating film forming composition according to the embodiment of the present invention is a coating film having excellent peelability, and is preferably a peelable coating film.

Here, the peelable coating film refers to a coating film that can be peeled in a sheet shape without cracking. The peelable coating film can be formed by applying and drying the coating film forming composition, and can be peeled in a sheet shape, so that the removal work can be facilitated.

When the coating film formed by the coating film forming composition according to the embodiment of the present invention is formed by being dried at 25°C for 12 hours, and further dried at 35°C for 4 hours to obtain a coating film having a thickness of 230 ± 170 $\mu$m, a peeling index represented by the following formula (2a) is preferably 2.5 or more, and more preferably more than 2.5.

$$\text{Peeling index} = (\text{Strength at break (MPa)}) / \{\text{adhesive force (N)} / (\text{film thickness (mm)} \times \text{width (mm)})\} \text{ ... Formula (2a)}$$

The peeling index is preferably 3.0 or more, more preferably 5.0 or more, and still more preferably 10 or more, from the viewpoint of ease of peeling work.

The coating film formed by the coating film forming composition according to the embodiment of the present invention under the above conditions has a strength at break at a tensile speed of 300 mm/min of preferably 2.0 MPa or more, more preferably 2.5 MPa or more, and still more preferably 3.0 MPa or more. When the strength at break of the coating film is 2.0 MPa or more, the strength of the coating film is sufficiently high, a peelable coating film can be obtained, and deformation of the coating film due to an external force is prevented.

The strength at break is a strength at break of the coating film at a tensile speed of 300 mm/min.

The coating film formed by the coating film forming composition according to the embodiment of the present invention preferably has an adhesive force of 0.5 N/20 mm or more.

The adhesive force is an adhesive force of the coating film against SUS. As an index indicating the resistance to peeling from an adherend when the coating film is used, an adhesive force against SUS304 2B shearing (hereinafter referred to as SUS) finishing can be used.

The coating film formed by the coating film forming composition according to the embodiment of the present invention under the above conditions has an adhesive force of preferably 0.5 N/20 mm or more, more preferably 1.0 N/20 mm or more, and still more preferably 2.0 N/20 mm or more when the coating film is pulled from a SUS substrate at a peeling angle of 180° and a peeling rate of 300 mm/min using a tensile tester (AUTOGRAPH AGS-X, manufactured by Shimadzu Corporation), from the viewpoint of adhesion. From the viewpoint of workability at the time of peelding, the adhesive force is preferably 15 N/20 mm or less, more preferably 10 N/20 mm or less, and still more preferably 5 N/20 mm or less.

The adhesive force of the coating film can be measured by the method described in Examples.

The peeling index, the tensile strength at break, and the adhesive force of the coating film formed by the coating film forming composition according to the embodiment of the present invention can be adjusted depending on the composition of the coating film forming composition, for example, the type and content of a resin that can be contained, the type and content of a peeling agent or a film forming aid that can be used in combination with the resin, and the like.

The coating film forming composition is preferably an aqueous dispersion in which a resin is dispersed and contained in water. As the aqueous dispersion, in general, a dispersion in which a resin is dispersed in the presence of a surfactant is used, but as long as the resin is dispersed and contained in water, a dispersion in which a self-dispersing resin is self-dispersed to form an aqueous dispersion can be used.

In the coating film forming composition according to the embodiment of the present invention, the minimum film forming temperature (MFT) is preferably 25°C or less, more preferably 10°C or less, and still more preferably 5°C or less from the viewpoint of film formation at room temperature.

(Resin)

In the coating film forming composition, various resins can be used as a base polymer.

The base polymer in the coating film forming composition according to the present embodiment refers to a main component of a polymer contained in the coating film forming composition. In this specification, the term "main component" refers to a component contained in an amount of more than 50 mass%, unless otherwise specified.

Examples of the resin include a polyurethane resin (urethane-based resin), a rubber-based resin, an acrylic-based resin, a silicone-based resin, a vinyl alkyl ether-based resin, a polyvinyl alcohol-based resin, a polyvinyl pyrrolidone-based resin, a polyacrylamide-based resin, a cellulose-based resin, a polyester-based resin, a polystyrene-based resin, and a fluorine-based resin. It is preferable to contain at least one resin selected from a urethane-based resin, an acrylic-based resin, a styrene-based resin, and a rubber-based resin, and it is more preferable to contain a urethane-based resin.

The polyurethane-based resin is typically a reaction product of polyol and polyisocyanate. As the polyol component, polymer polyols such as polyacryl polyol, polyester polyol, polyether polyol, and polycarbonate polyol are preferably used.

The polyacryl polyol is typically obtained by polymerization of a (meth)acrylic acid ester and a hydroxyl group-containing monomer. Examples of the (meth)acrylic acid ester include methyl(meth)acrylate, butyl(meth)acrylate, 2-ethylhexyl(meth)acrylate, and cyclohexyl(meth)acrylate. Examples of the hydroxyl group-containing monomer include hydroxyalkyl esters of (meth)acrylic acid such as 2-hydroxyethyl(meth)acrylate, 2-hydroxypropyl(meth)acrylate, 3 -hydroxypropyl(meth)acrylate, 2-hydroxybutyl(meth)acrylate, 4-hydroxybutyl(meth)acrylate, and 2-hydroxypentyl(meth)acrylate; (meth)acrylic acid monoesters of polyhydric alcohol such as glycerin and trimethylolpropane; and N-methylol(meth)acrylamide.

The polyester polyol is typically obtained by a reaction between polybasic acid and polyol. Examples of the polybasic acid include aromatic dicarboxylic acids such as orthophthalic acid, isophthalic acid, terephthalic acid, 1,4-naphthalenedicarboxylic acid, 2,5-naphthalenedicarboxylic acid, 2,6-naphthalenedicarboxylic acid, biphenyldicarboxylic acid, and tetrahydrophthalic acid; aliphatic dicarboxylic acids such as oxalic acid, succinic acid, malonic acid, glutaric acid, adipic acid, pimelic acid, suberic acid, azelaic acid, sebacic acid, decanedicarboxylic acid, dodecanedicarboxylic acid, octadecanedicarboxylic acid, tartaric acid, alkylsuccinic acid, linolenic acid, maleic acid, fumaric acid, mesaconic acid, citraconic acid, and itaconic acid; alicyclic dicarboxylic acids such as hexahydrophthalic acid, tetrahydrophthalic acid, 1,3-cyclohexanedicarboxylic acid, and 1,4-cyclohexanedicarboxylic acid; and reactive derivatives such as acid anhydrides, alkyl esters, and acid halides thereof. Examples of the polyol include polyhydric alcohols described below.

The polyether polyol is typically obtained by ring-opening polymerization and addition of alkylene oxide on polyhydric alcohol. Examples of the polyhydric alcohol include ethylene glycol, diethylene glycol, propylene glycol, dipropylene glycol, glycerin, and trimethylolpropane. Examples of the alkylene oxide include ethylene oxide, propylene oxide, butylene oxide, styrene oxide, and tetrahydrofuran.

Examples of the polycarbonate polyol include: a polycarbonate polyol obtained by subjecting the polyol component and phosgene to a polycondensation reaction; a polycarbonate polyol obtained by subjecting the polyol component and a carbonic acid diester such as dimethyl carbonate, diethyl carbonate, dipropyl carbonate, diisopropyl carbonate, dibutyl carbonate, ethylbutyl carbonate, ethylene carbonate, propylene carbonate, diphenyl carbonate, or dibenzyl carbonate to transesterification and condensation; a copolymerized polycarbonate polyol obtained by using two or more kinds of the polyol components in combination; a polycarbonate polyol obtained by subjecting each of the various polycarbonate polyols and a carboxyl group-containing compound to an esterification reaction; a polycarbonate polyol obtained by subjecting each of the various polycarbonate polyols and a hydroxyl group-containing compound to an etherification reaction; a polycarbonate polyol obtained by subjecting each of the various polycarbonate polyols and an ester compound to a transesterification reaction; a polycarbonate polyol obtained by subjecting each of the various polycarbonate polyols and a hydroxyl group-containing compound to a transesterification reaction; a polyester-type polycarbonate polyol obtained by subjecting each of the various polycarbonate polyols and a dicarboxylic acid compound to a polycondensation reaction; and a copolymerized polyether-based polycarbonate polyol obtained by subjecting each of the various polycarbonate polyols and an alkylene oxide to copolymerization.

Examples of the polyisocyanate include aliphatic diisocyanates such as tetramethylene diisocyanate, dodecamethylene diisocyanate, 1,4-butane diisocyanate, hexamethylene diisocyanate, 2,2,4-trimethylhexamethylene diisocyanate, 2,4,4-trimethylhexamethylene diisocyanate, lysine diisocyanate, 2-methylpentane-1,5-diisocyanate, and 3-methylpentane-1,5-diisocyanate; alicyclic diisocyanates such as isophorone diisocyanate, hydrogenated xylylene diisocyanate, 4,4'-cyclohexylmethane diisocyanate, 1,4-cyclohexane diisocyanate, methylcyclohexylene diisocyanate, and 1,3-bis(isocyanatemethyl)cyclohexane; aromatic diisocyanates such as tolylene diisocyanate, 2,2'-diphenylmethane diisocyanate, 2,4'-diphenylmethane diisocyanate, 4,4'-diphenylmethane diisocyanate, 4,4'-diphenyldimethylmethane diisocyanate, 4,4'-dibenzyl diisocyanate, 1,5-naphthylene diisoecyanate, xylylene diisocyanate, 1,3-phenylene diisocyanate, and 1,4-phenylene diisocyanate; and aromatic aliphatic diisocyanates such as dialkyldiphenylmethane diisocyanate, tetraalkyldiphenylmethane diisocyanate, and $\alpha,\alpha,\alpha,\alpha$-tetramethylxylylene diisocyanate.

The acrylic-based resin is preferably obtained by, for example, emulsion polymerization of a monomer component containing alkyl(meth)acrylate. The alkyl(meth)acrylate refers to alkyl acrylate and/or alkyl methacrylate, and the term "(meth)" in the present invention has the same meaning.

Examples of the alkyl(meth)acrylate include methyl(meth)acrylate, ethyl(meth)acrylate, propyl(meth)acrylate, isopropyl(meth)acrylate, n-butyl(meth)acrylate, pentyl(meth)acrylate, hexyl(meth)acrylate, heptyl(meth)acrylate, 2-ethylhexyl(meth)acrylate, octyl(meth)acrylate, isooctyl(meth)acrylate, nonyl(meth)acrylate, isononyl(meth)acrylate, decyl(meth)acrylate, isodecyl(meth)acrylate, lauryl(meth)acrylate, and tetradecyl(meth)acrylate. These alkyl(meth)acrylates may be used alone or in combination of two or more kinds thereof. Among these, n-butyl acrylate (BA) and 2-ethylhexyl acrylate (2EHA) are preferable as the alkyl(meth)acrylate.

The proportion of the alkyl(meth)acrylate in the total monomer components used in the synthesis of the acrylic-based resin is preferably 70 mass% or more, more preferably 85 mass% or more, and still more preferably 90 mass% or more. The upper limit of the proportion of the alkyl(meth)acrylate is not particularly limited, but the proportion of the alkyl(meth)acrylate is usually preferably 99.5 mass% or less (e.g., 99 mass% or less). Alternatively, the acrylic-based resin may be substantially obtained by polymerizing only alkyl(meth)acrylate.

As the styrene-based resin, for example, SBS (styrene/butadiene/styrene block copolymer), SIS (styrene/isoprene/styrene block copolymer), SEBS (styrene/ethylene/butylene/styrene block copolymer), SEPS (styrene/ethylene/propylene/styrene block copolymer), and SEEPS (styrene/ethylene/ethylene/propylene/styrene block copolymer) can be used.

As the rubber-based resin, an acrylic rubber, a diene-based rubber, a butyl rubber, a nitrile rubber, a hydrogenated nitrile rubber, a fluorine rubber, a silicone rubber, an ethylene propylene rubber, a chloroprene rubber, a urethane rubber, and an epichlorohydrin rubber can be used. In particular, an acrylic rubber, a diene-based rubber, or a urethane rubber is preferably used. As the diene-based rubber, a natural rubber, an isoprene rubber, a butadiene rubber, a styrene butadiene rubber, a chloroprene rubber, and an acrylonitrile butadiene rubber can be used. A styrene butadiene rubber is preferably used.

The coating film forming composition may contain a compound containing a polar group. Examples of such a compound include a resin containing a polar group, a silane coupling agent, a crosslinking agent, and a silicone oil. Examples of the resin containing a polar group include an ionomer, a rosin resin, and a silicone resin. The content of these compounds with respect to the resin component in the coating film forming composition is preferably 0.1 mass% to 95 mass%, more preferably 0.5 mass% to 60 mass%, still more preferably 0.5 mass% to 40 mass%, particularly preferably 0.5 mass% to 20 mass%, most preferably 1 mass% to 20 mass%, with respect to the total mass of the resin component.

The content proportion of the resin component in the coating film forming composition is preferably 5 mass% to 95 mass%, more preferably 10 mass% to 90 mass%, still more preferably 15 mass% to 80 mass%, particularly preferably 20 mass% to 70 mass%, most preferably 25 mass% to 60 mass%.

The coating film forming composition may be an emulsion, and is preferably an emulsion-type resin composition using a polymer emulsion obtained by emulsion polymerization.

Examples of the emulsion-type resin composition include an emulsion containing the resin component described above. A urethane-based emulsion containing a urethane resin or an acrylic-based emulsion containing an acrylic-based resin is preferable.

The emulsion polymerization is carried out by emulsifying the monomer component in water and then performing emulsion polymerization by a common method. Thus, an aqueous dispersion (polymer emulsion) is prepared. In the emulsion polymerization, for example, a surfactant (emulsifier), a radical polymerization initiator, and, if necessary, a chain transfer agent are appropriately blended together with the monomer component. More specifically, for example, a known emulsion polymerization method such as a batch charging method (batch polymerization method), a monomer dropping method, or a monomer emulsion dropping method can be adopted. In the monomer dropping method and the monomer emulsion dropping method, continuous dropping or divided dropping is appropriately selected. These methods can be appropriately combined. The reaction conditions and the like are appropriately selected. The polymerization temperature is preferably, for example, about 40°C to 95°C. The polymerization time is preferably about 30 minutes to 24 hours.

The initiator used for the emulsion polymerization can be appropriately selected from polymerization initiators known in the related art. For example, azo-based polymerization initiators such as 2,2'-azobisisobutyronitrile can be preferably used. Other examples of the polymerization initiator include persulfates such as potassium persulfate; peroxide-based initiators such as benzoyl peroxide and hydrogen peroxide; substituted ethane-based initiators such as phenyl-substituted ethane; and aromatic carbonyl compounds. Yet another example of the polymerization initiator is a redox-based initiator in which a peroxide and a reducing agent are combined. These polymerization initiators can be used alone or in combination of two or more kinds thereof. The amount of the polymerization initiator to be used may be an ordinary amount, and can be selected from the range of about 0.005 part by mass to 1 part by mass (typically 0.01 part by mass to 1 part by mass) with respect to 100 parts by mass of the starting monomer material.

As the emulsifier, any of an anionic-based emulsifier, a nonionic-based emulsifier, and a cationic-based emulsifier can be used. These may be used alone or in combination of two or more kinds thereof. In general, an anionic-based or nonionic-based emulsifier is preferably used. Examples of the anionic-based emulsifier include sodium lauryl sulfate, ammonium lauryl sulfate, sodium dodecylbenzene sulfonate, sodium polyoxyethylene alkyl ether sulfate, ammonium polyoxyethylene alkyl phenyl ether sulfate, and sodium polyoxyethylene alkyl phenyl ether sulfate. Examples of the nonionic-based emulsifier include polyoxyethylene alkyl ether and polyoxyethylene alkyl phenyl ether. A radical polymerizable emulsifier (reactive emulsifier) having a structure in which a radical polymerizable group such as a propenyl group is introduced into the anionic-based or nonionic-based emulsifier as described above may be used. Although not particularly limited, an embodiment in which only an emulsifier having no radical polymerizable group is used can be preferably adopted, from the viewpoint of polymerization stability at the time of synthesis of the resin, storage stability of the coating film forming composition, and the like.

In the polymerization, various chain transfer agents (which can also be understood as a molecular weight regulator or a polymerization degree regulator) known in the related art can be used as necessary. The chain transfer agent may be, for example, one, two or more selected from mercaptans such as n-lauryl mercaptan, tert-lauryl mercaptan, glycidyl mercaptan, and 2-mercaptoethanol. Preferred among these chain transfer agents are n-lauryl mercaptan and tert-lauryl mercaptan. When the chain transfer agent is used in the polymerization of the starting monomer material, the amount of the chain transfer agent to be used is not particularly limited. For example, the amount of the chain transfer agent to be used may be about 0.001 part by mass to 0.5 part by mass, and is preferably 0.01 part by mass to 0.1 parts by mass, with respect to 100 parts by mass of the starting monomer material.

The Mw of the obtained resin is typically $10 \times 10^4$ or more, and usually suitably $20 \times 10^4$ or more. From the viewpoint of suitably achieving both the adhesive force to an adherend and the cohesive force when the coating film is formed, the Mw is preferably $30 \times 10^4$ or more, and more preferably $40 \times 10^4$ or more (e.g., $50 \times 10^4$ or more). The upper limit of Mw is not particularly limited, and the Mw may be, for example, $500 \times 10^4$ or less, typically $200 \times 10^4$ or less, and preferably $150 \times 10^4$ or less. The Mw can be adjusted depending on, for example, the type and amount of the polymerization initiator to be used, the polymerization temperature, the type and amount of the emulsifier to be used, the presence or absence of the chain transfer agent to be used, the type and amount of the chain transfer agent to be used, the composition of the starting monomer material, and the type and degree (gel fraction) of crosslinking.

The coating film forming composition according to the embodiment of the present invention preferably further contains a surfactant, a crosslinking agent, a peeling agent, or a film forming aid.

(Surfactant)

The coating film forming composition according to the embodiment of the present invention preferably contains a surfactant.

When the coating film forming composition contains a surfactant, the water contact angle after the surface of the coating film formed by the coating film forming composition is washed with water is easily set to 25° or less. The reason for this is not clear, but the present inventors presume as follows. That is, when the coating film forming composition according to the embodiment of the present invention contains a surfactant, the surfactant is present on the surface of the coating film formed by the coating film forming composition according to the embodiment of the present invention. As a result, the water contact angle is small, and water is less likely to adhere and becomes easy to flow. In addition, it is presumed that when water or the like containing dirt adheres to the surface of the coating film, the dirt or the like flows down together with the surfactant to exhibit an excellent antifouling effect.

By adjusting the type and blending amount of the resin and the surfactant to be blended in the coating film forming composition, the surfactant in the coating film is moved (exudes) to the surface of the coating film after the surfactant that has been unevenly distributed on the surface is washed off by washing with water, and the water contact angle can be set to 25° or less again.

Examples of the surfactant include an anionic-based surfactant, a nonionic-based surfactant, an amphoteric surfactant, and a cationic-based surfactant. Among these, the nonionic-based surfactant is preferable because of little interaction with dirt.

The surfactant is classified into a silicone-based surfactant, a fluorine-based surfactant, an alkyl-based surfactant, an aromatic-based surfactant, and the like depending on the type of a hydrophobic moiety. Among these, a silicone-based surfactant is preferable from the viewpoint of surface migration properties in which the surfactant in the coating film is moved (exudes) to the surface of the coating film.

Examples of the silicone-based surfactant include those having a side chain and a terminal modified with PEG (polyethylene glycol), an amino group, and a carboxyl group. Among these, a PEG-modified silicone-based surfactant is preferable. The silicone-based surfactant may be only one kind or two or more kinds.

Examples of the anionic surfactant include an alkylbenzene sulfonate, an alkyl or alkenyl ether sulfate, an alkyl or alkenyl sulfate, an $\alpha$-olefin sulfonate, an $\alpha$-sulfo fatty acid or ester salt, an alkanesulfonate, a saturated or unsaturated fatty acid salt, an alkyl or alkenyl ether carboxylate, an amino acid type surfactant, an N-acylamino acid type surfactant, and an alkyl or alkenyl phosphate ester or a salt thereof. The anionic surfactant may be only one kind or two or more kinds.

Examples of the nonionic surfactant include polyoxyalkylene alkyl or alkenyl ether, polyoxyethylene alkyl phenyl ether, higher fatty acid alkanolamide or an alkylene oxide adduct thereof, sucrose fatty acid ester, alkyl glycoxide, fatty acid glycerin monoester, and alkylamine oxide. The nonionic surfactant may be only one kind or two or more kinds.

Examples of the amphoteric surfactant include carboxy type or sulfobetaine type amphoteric surfactants. The amphoteric surfactant may be only one kind or two or more kinds.

Examples of the cationic surfactant include a quaternary ammonium salt. The cationic surfactant may be only one kind or two or more kinds.

The molecular weight of the surfactant is preferably 200 or more, more preferably 500 or more, and still more preferably 1000 or more. This is because, when the molecular weight is 200 or more, the surfactant is likely to remain in the coating film even after the film formation, and the elution property is appropriately controlled, so that the life of the washing effect can be extended. From the viewpoint of the surface migration properties, the molecular weight is preferably 10000 or less, more preferably 5000 or less, and still more preferably 3000 or less.

The surfactant is preferably hydrophilic from the viewpoint of preventing deterioration of the film forming property when incorporated into the aqueous coating material.

The content of the surfactant in the coating film forming composition in the present embodiment is not particularly limited. From the viewpoint of obtaining hydrophilicity of the surface of the formed coating film, the content of the surfactant is preferably 0.1 parts by mass or more, more preferably 0.5 parts by mass or more, and still more preferably 1 part by mass or more, with respect to 100 parts by mass of the monomer constituting the base polymer. The content of the surfactant is preferably 10 parts by mass or less, more preferably 8 parts by mass or less, and still more preferably 6 parts by mass or less, from the viewpoint of preventing a decrease in water resistance due to the surfactant.

That is, the coating film forming composition in the present embodiment contains a resin and a surfactant, and the content of the surfactant is preferably 0.1 part by mass to 10 parts by mass, with respect to 100 parts by mass of the resin.

(Crosslinking Agent)

The coating film forming composition according to the embodiment of the present invention may contain a crosslinking agent.

The introduction of a crosslinked structure into the base polymer contained in the coating film forming composition according to the embodiment of the present invention has an effect of improving water resistance and chemical resistance of the coating film. For example, a crosslinking agent is added to a solution obtained after polymerization of the base polymer, and if necessary, irradiation with an actinic ray or heating is performed, whereby a crosslinked structure is introduced and crosslinking proceeds.

Examples of the crosslinking agent include a photocuring agent such as a photocurable monomer and a photocurable oligomer, an isocyanate-based crosslinking agent, an epoxy-based crosslinking agent, an oxazoline-based crosslinking agent, an aziridine-based crosslinking agent, a carbodiimide-based crosslinking agent, and a metal chelate-based crosslinking agent. These crosslinking agents react with functional groups such as a hydroxy group and a carboxy group introduced into the base polymer to form a crosslinked structure. The crosslinking agent is preferably a photocurable monomer, a photocurable oligomer, or an isocyanate-based crosslinking agent because the reactivity with a hydroxy group or a carboxy group of the base polymer is high and the crosslinked structure can be easily introduced.

The crosslinking agent may be used alone or in combination of two or more kinds thereof.

The crosslinking agent in the present embodiment may be an isocyanate compound.

The isocyanate compound (isocyanate) is hydrolyzed in the presence of water to become an amine, and the isocyanate and the amine react with each other to form a urea bond, thereby curing the isocyanate compound. A chemical bond can be formed with a hydroxyl group, an amino group, a carboxyl group, or the like on the surface of the adherend.

Examples of the isocyanate compound include aliphatic isocyanate, alicyclic isocyanate, and aromatic isocyanate. Among these, aliphatic isocyanate and alicyclic isocyanate are preferable because the compatibility with a base polymer, particularly a rubber-based polymer is good, and the reactive with moisture or water is slow.

Examples of the aliphatic isocyanate include ethylene diisocyanate, propylene diisocyanate, tetramethylene diisocyanate, hexamethylene diisocyanate (HDI), trimethylhexamethylene diisocyanate (TMHMDI), dodecamethylene diisocyanate, lysine diisocyanate (LDI), and lysine triisocyanate (LTI). Among them, hexamethylene diisocyanate is preferable.

Examples of the alicyclic isocyanate include isophorone diisocyanate (IPDI), cyclohexylene diisocyanate (CHDI), 4,4'-dicyclohexylmethane diisocyanate, hydrogenated XDI ($H_6$XDI), hydrogenated MDI ($H_{12}$MDI), and norbornene diisocyanate (NBDI).

Examples of the aromatic isocyanate include diphenylmethane diisocyanate (MDI) such as 4,4'-diphenylmethane diisocyanate, 2,4'-diphenylmethane diisocyanate, and 2,2'-diphenylmethane diisocyanate; crude diphenylmethane diisocyanate; polynuclear polyphenylene polymethyl polyisocyanate (polymeric MDI); tolylene diisocyanate (TDI) such as 2,4-toluene diisocyanate and 2,6-toluene diisocyanate; naphthalene diisocyanate (NDI) such as 1,4-naphthalene diisocyanate and 1,5-naphthalene diisocyanate; 1,5-tetrahydronaphthalene diisocyanate; phenylene diisocyanate (PDI) such as 1,2-phenylene diisocyanate, 1,3-phenylene diisocyanate, and 1,4-phenylene diisocyanate; xylene diisocyanate (XDI); tetramethylxylylene diisocyanate (TMXDI); tolidine diisocyanate (TODI); 2,4,6-trimethylphenyl-1,3-diisocyanate, 2,4,6-triisopropylphenyl-1,3-diisocyanate, chlorophenylene-2,4-diisocyanate, 4,4'-diphenyl ether diisocyanate, 3,3'-dimethyl-4,4'-diphenylmethane diisocyanate, 3,3'-dimethoxy-4,4'-diphenylene diisocyanate, and 3,3'-dichloro-4,4'-biphenylene diisocyanate;

The content of the crosslinking agent in the coating film forming composition in the present embodiment is not particularly limited. From the viewpoint of obtaining sufficient water resistance and chemical resistance, the content of the crosslinking agent is preferably 0.005 part by mass or more, more preferably 0.0075 part by mass or more, and still more preferably 0.01 part by mass or more, with respect to 100 parts by mass of the monomer constituting the base polymer. From the viewpoint of the influence of crosslinking on the film forming property, the content of the crosslinking agent is preferably 30 parts by mass or less, more preferably 20 parts by mass or less, and still more preferably 10 parts by mass or less.

The preferred range of the content of the crosslinking agent with respect to 100 parts by mass of the base polymer in the coating film is substantially the same as the preferred range of the content of the crosslinking agent with respect to 100 parts by mass of the monomer constituting the base polymer in the coating film forming composition, and the same applies to other components that can be contained in the coating film forming composition.

(Peeling Agent and Film Forming Aid)

The coating film forming composition according to the embodiment of the present invention may contain a peeling agent and a film forming aid.

The peeling agent is an additive that adjusts the adhesive force of the formed coating film and assists the peeling from the adherend. When the peeling agent is contained, the coating film formed by the coating film forming composition and the adherend to be protected have appropriate adhesion, and the function of completely peeling the coating film without damaging the coating film is easily maintained for a long period of time when peeling the coating film.

As the peeling agent, at least one compound selected from surfactants (an anionic-based surfactant, a nonionic-based surfactant, and an amphoteric surfactant), polyhydric alcohols, waxes, and the like can be suitably used. These can be dissolved or dispersed in water, or can be used in the form of powder.

Examples of the anionic-based surfactants include fatty acid salts such as sodium oleate, semi-cured beef tallow sodium, and potassium oleate; higher alcohol sulfate ester salts such as sodium lauryl sulfate ester, sodium higher alcohol sulfate ester, triethanolamine lauryl alcohol sulfate ester, and ammonium lauryl alcohol sulfate ester; alkylbenzene sulfonates such as sodium dodecylbenzene sulfonate; alkylnaphthalene sulfonates such as sodium alkylnaphthalene sulfonate; naphthalenesulfonic acid-formalin condensates; dialkylsulfosuccinates such as sodium dioctylsulfosuccinate; alkylphosphates; and those obtained by adding ethylene oxide to the anionic surfactants. These may be used alone or in combination of two or more kinds thereof. Particularly, a phosphoric acid ester-type surfactant (e.g., Phosphanolrl RS-410 (manufactured by Toho Chemical Industry Co., Ltd.)) is preferable, and the amount thereof to be used is 0.001 mass% to 5 mass%, preferably 0.005 mass% to 3 mass%, and more preferably 0.005 mass% to 1 mass% in the peelable resin composition of the present invention.

In addition, the nonionic-based surfactant, for example, polyoxyethylene alkyl ethers such as polyoxyethylene oleyl ether and polyoxyethylene lauryl ether, polyoxyethylene alkyl phenyl ethers such as polyoxyethylene nonyl phenyl ether and polyoxyethylene octyl phenyl ether, polyoxyethylene alkyl esters such as polyoxyethylene monolaurate and polyoxyethylene monostearate, sorbitan esters such as sorbitan monolaurate and sorbitan monostearate, polyoxyethylene sorbitan alkyl esters such as polyoxyethylene sorbitan monolaurate, and polyoxyethylene polypropylene block polymers may be used in combination with the anionic-based surfactant.

Furthermore, the amphoteric surfactant, for example, betaine type amphoteric surfactants such as dimethylalkylbetaine, laurylbetaine, and stearylbetaine, and a small amount of cationic surfactant may be used in combination.

Examples of the polyhydric alcohol include ethylene glycol, propylene glycol, glycerin, catechol, butanediol, pentanediol, erythritol, glycerin monoalkyl ester, polyethylene glycol, and polypropylene glycol. Preferred are ethylene glycol, propylene glycol and glycerin.

Specific examples of the waxes include plant-based waxes such as candelilla wax, carnauba wax, rice wax, Japan wax, and jojoba oil; animal-based waxes such as beeswax, lanolin, and spermaceti wax; mineral-based waxes such as montan wax, ozokerite, and ceresin; petroleum-based waxes such as paraffin wax, microcrystalline wax, and petrolatum; synthetic hydrocarbon-based waxes such as Fischer-Tropsch wax, polyethylene oxide wax, polyethylene wax, and acrylic-ethylene copolymer wax; modified waxes such as montan wax derivatives, paraffin wax derivatives, and microcrystalline wax derivatives; hydrogen-based waxes such as curable castor oil, curable castor oil derivatives; and others such as 12-hydroxystearic acid, stearic acid amide, phthalic anhydride imide, bisamide, amide, glycerin ester, sorbitan ester, higher alcohol (C12 or more, preferably C16 or more), and higher fatty acid (C12 or more, preferably C16 or more).

The film forming aid is an additive that assists the formation of a coating film. The film forming aid has a temporary plasticizing function of evaporating relatively quickly after the coating film is formed to improve the strength of the coating film. An organic solvent having a boiling point of 110°C to 200°C is preferably used.

For example, in the case where the coating film forming composition is an emulsion containing a resin component, a coating film having high uniformity can be obtained under a room temperature environment by blending the film forming aid even when the resin component has a minimum film forming temperature (MFT) of room temperature (15°C to 35°C) or higher.

Specific examples of the film forming aid include Texanol, propylene glycol monobutyl ether, ethylene glycol methyl ether, ethylene glycol ethyl ether, ethylene glycol monobutyl ether, diethylene glycol diethyl ether, dipropylene glycol monopropyl ether, carbitol, butyl carbitol, dibutyl carbitol, and benzyl alcohol. Among them, Texanol is particularly preferable because of a high film forming aid effect even in a small amount. The film forming aid is preferably contained in the coating film forming composition in an amount of 0.5 mass% to 15 mass%.

When the coating film forming composition contains a urethane-based resin as the resin (resin component), the coating film forming composition preferably further contains a crosslinking agent. In this case, carbodiimide is preferable contained as the crosslinking agent.

The coating film forming composition preferably contains a urethane-based resin as the resin, and further contains a surfactant or a crosslinking agent.

The coating film forming composition according to the embodiment of the present invention may contain any appropriate oil as long as the effects of the present invention are not impaired. Examples of such oils include silicone oils, liquid paraffins, surfactants, liquid hydrocarbons, fluorinated oils, waxes, petrolatum, animal fats, and fatty acids. These may be used alone or in combination of two or more kinds thereof.

When the coating film forming composition contains such an oil, the antifouling effect of the coating film may be more sufficiently exhibited, the adhesion of dirt may be more effectively prevented over a long period of time, and the appearance characteristics and mechanical characteristics of the coating film may be more sufficiently exhibited.

The coating film forming composition may contain any appropriate other additive as long as the effects of the present invention are not impaired. Examples of such other additives include thickeners (e.g., association type, synthetic polymer type, and alkali thickening type), colorants, and ultraviolet absorbers as weathering agents, light stabilizers, antimicrobial agents, antioxidants, antifoaming agents, diatom adhesion inhibitors, agricultural chemicals, medicines (medetomidine, etc.), enzyme activity inhibitors (alkylphenols, alkylresorcinols, etc.), organism repellent agents, and fillers.

Any appropriate antimicrobial agent may be adopted as the antimicrobial agent as long as the effects of the present invention are not impaired. Examples of such antimicrobial agents include so-called antimicrobial agents and antifungal agents.

Examples of the so-called antimicrobial agents include azoxystrobin, benalaxyl, benomyl, bitertanol, bromuconazole, captafol, captan, carbendazim, quinomethionate, chlorothalonil, clozolinate, cyprodinil, diclofluanide, diclofen, diclomedine, dicloran, diethofencarb, dimethomorph, diniconazol, dithianon, epoxy conazole, famoxadon, phenalimol, fenbuconazole, fenfuram, fenpicronyl, fentin, fluazinum, fludioxonyl, fluoroimide, flukinconazole, flusulfamide, flutranil, folpet, hexachlorobenzene, hexaconazole, imibenconazole, ipoconazole, iprodione, cresoxime methyl, manzeb, manneb, mepanipirim, mepronil, methconazole, methylam, nickel bis(dimethyldithiocarbamate), nuarimol, oxine-copper, oxolinic acid, pencyclon, phthalide, prosimidon, propineb, quintozen, sulfur, tebuconazole, tecrophthalam, technazen, thifluzamide, thiophenate methyl, thiram, torquelophos methyl, trillfluanide, triazimephone, triazimenol, triazoxide, triphorin, triticonazole, vinclozolin, zineb, and ziram. Examples of natural antimicrobial agents include Chinese herbal ingredients such as Moso bamboo extract, hinokitiol, garlic extract, and licorice. Examples thereof also include inorganic antimicrobial agents such as silver, copper, zinc, tin, lead, and gold. If necessary, zeolite, hydroxyapatite, calcium carbonate, silica gel, aluminum calcium silicate, a polysiloxane compound, zirconium phosphate, zirconium sulfate, an ion exchanger, zinc oxide, or the like can be used as a carrier for these inorganic antimicrobial agents. Examples of the antimicrobial agent of a synthesized product include 2-pyridinethiol-1-oxide, p-chloro-m-cresol, polyhexamethylenebiguanide, hydrochloride, benzethonium chloride, alkyl polyaminoethylglycine, benzisothiazoline, 5-chloro-2-methyl-4-isothiazolin-3-one, 1,2-benzisothiazolin-3-one, and 2,2'-dithio-bis-(pyridine-1 -oxide).

Examples of the antifungal agents include sodium dehydroacetate, sodium benzoate, sodium pyridinethion-1-oxide, p-hydroxybenzoic acid ethyl ester, 1,2-benzisothiazolin-3-one, and salts thereof.

A filler or the like may be added to the coating film forming composition in order to improve the strength. Examples of the filler include silica particles, mica, kaolin, talc, and diatomaceous earth. The average particle size of the particles is preferably 5 nm to 300 nm. By adjusting the size of the particles within the above range, sufficient strength can be imparted to the coating film, the particles can be uniformly dispersed in the coating film, and cracks can be less likely to occur when an impact is applied to the coating film. The adhesion between the coating film and the adherend can also be improved. The addition amount of the particles is preferably 0.1 mass% to 10 mass% with respect to the total mass of the resin component.

The surface-treated particles are preferable from the viewpoint of improving the antifouling property of the coating film. Examples of the particles having a hydrophobic surface include hydrophobic fumed silica manufactured by Nippon Aerosil Co., Ltd. Specific examples thereof include trade names "AEROSIL (registered trademark) RX series" (RX50, RX200, RX300, etc.), "AEROSIL (registered trademark) RY series" (RY50, RY200, RY200S, etc.), "AEROSIL (registered trademark) NY50 series", "AEROSIL (registered trademark) NAX series", and "AEROSIL (registered trademark) R series" manufactured by Nippon Aerosil Co., Ltd.

The coating film forming composition can be applied to an adherend and dried to form a coating film. A coating film having high uniformity can be obtained even by drying at room temperature (25°C).

As the coating method, any adherend can be directly coated by a known coating method such as spraying, brush coating, roller, curtain flow, roll, dipping, or coater.

As the drying method, drying (first drying) may be performed at a temperature of, for example, 0°C to 250°C (preferably a temperature of room temperature (25°C) to 180°C, more preferably a temperature of room temperature to 160°C) for, for example, 2 minutes to 12 hours.

If necessary, further drying (second drying) may be performed at a temperature of, for example, 0°C to 250°C (preferably, a temperature of room temperature (25°C) to 180°C, and more preferably, a temperature of room temperature to 160°C) for, for example, 2 minutes to 12 hours. As a result, the fusion of the grain boundaries proceeds, and the uniformity of the coating film increases, so that a coating film that is less likely to swell and has an excellent antifouling effect can be formed.

The second drying is preferably performed at a temperature higher than the first drying temperature by 0°C to 20°C and for a shorter time than that in the first drying temperature.

Specific examples of the adherend include various structures such as a metal product, a woodworking product, a plastic product, a glass product, a medical member (for example, a catheter, a stent, a glove, tweezers, a container, a guide, a tray, etc.), a building (an inner and outer wall surface, a floor surface, or a ceiling surface), an electronic device, and a transportation device (for example, a vehicle such as an automobile, a two-wheeled vehicle, or a railway, or a ship).

The coating film forming composition can also be used for a petri dish for cell culture, a plate such as a microwell, a transport tray, a container, a tank, a guide, food manufacturing equipment, a wall or a table of a hospital, a home for aged people or a kindergarten park, coating at a place where food is handled, and the like, since the content of the organic solvent is extremely small. It can be used to form an antifouling coating film for medical use in medical instruments and the like.

<Coating Film>

The coating film according to the embodiment of the present invention is formed by the coating film forming composition described above, and is useful for preventing adhesion of dirt. That is, the coating film according to the embodiment of the present invention has a water contact angle, after the surface is washed with water, of 25° or less, and a water content, after impregnation with water at 25°C for 2 hours, of 110% or less.

FIG. 1 is a cross-sectional view showing a structural member on which the coating film according to the embodiment of the present invention is formed. As shown in FIG. 1, a coating film 21 may be formed by applying the coating film forming composition according to the embodiment of the present invention onto the surface of a structural member (adherend) 31 and then drying the coating film forming composition. The coating film 21 is preferably a peelable coating film that can be peeled from the structural member 31 at a desired timing.

Any appropriate thickness can be adopted as the thickness of the coating film depending on the application, the use environment, and the like. The thickness of the coating film is preferably 10 $\mu$m to 5000 $\mu$m. When the thickness of the coating film falls within the above range, the antifouling effect effectively works for a sufficiently long time. When the thickness of the coating film is 10 $\mu$m or more, the antifouling effect is effectively exhibited, which is practical. When the thickness of the coating film is 5000 $\mu$m or less, the working efficiency is excellent.

The thickness of the coating film can be measured using, for example, RI-205 manufactured by PEAKOCK.

The coating film may be used as an undercoat layer, and an antifouling layer, a rust preventive coating material, a hard coat, or the like may be further provided on the coating film.

As the composition for forming the antifouling layer, for example, a hydrophilic coating such as a silica-based overcoat or a betaine-based polymer brush, or a hydrophobic coating such as a silicone-based resin or a fluorine-based polymer can be used. In particular, since the hydrophilic coating has self-cleaning performance, the hydrophilic coating is preferable from the viewpoint of antifouling property.

Since the coating film is less likely to swell, the adhesion between the undercoat layer and the antifouling layer does not decrease over a long period of time even when the antifouling layer or the like is laminated on the coating film.

The rust preventive coating material, the hard coat and the antifouling layer may contain any suitable other additives as long as the effect of the present invention is not impaired. Examples of such other additives include a ultraviolet absorber, a light stabilizer, and a filler.

[Examples]

Hereinafter, the present invention will be specifically described with reference to Examples, but the present invention is not limited to these Examples.

(Example 1)

A coating film forming composition 1 (resin (SF-470, manufactured by Dai-ichi Kogyo Seiyaku Co., Ltd., Superflex 470, carbonate-based urethane): 100 parts by mass, a surfactant (Silwet L7600, manufactured by Momentive, silicone-based surfactant): 3 parts by mass, and a crosslinking agent (V-10, manufactured by Nisshinbo Chemical Inc., carbodiimide-based crosslinking agent): 3 parts by mass were mixed, stirred with a disper at a rotation speed of 3000 rpm for 3 minutes or more, and vacuum-defoamed with Awatori Rentaro (manufactured by THINKY CORPORATION) at 2200 rpm for 5 minutes to prepare a coating film forming composition of Example 1.

(Examples 2 to 10 and Comparative Examples 1 to 8)

Coating film forming compositions of Examples and Comparative Examples were prepared in the same manner as in Example 1 except that the types and blending amounts of a resin, a surfactant, and a crosslinking agent were changed as shown in Table 1.

(Measurement of Water Contact Angle)

(Dry Water Contact Angle (dry-WCA [°])

The coating film forming composition of each of Examples and Comparative Examples was applied to a surface of a PET film (product name "Lumirror S10", manufactured by Toray Industries, Inc.) having a thickness of 75 $\mu$m with an applicator to have a wet thickness of 250 $\mu$m, and dried at room temperature (25°C) for 12 hours, and the formed coating film is further dried at 35°C for 4 hours, thereby obtaining a sample for measurement. For the obtained sample for measurement, a contact angle of the surface of the coating film after a lapse of 5 minutes from dropping 2 $\mu$L of water on the surface of the coating film was measured by a static drop method according to JIS R 3257 using a contact angle meter (Drop Master, manufactured by Kyowa Interface Science Co., Ltd.).

(Wet Water Contact Angle (wet-WCA [°])

The coating film forming composition of each of Examples and Comparative Examples was applied to a surface of a PET film (product name "Lumirror S10", manufactured by Toray Industries, Inc.) having a thickness of 75 $\mu$m with an applicator to have a wet thickness of 250 $\mu$m, and dried at room temperature (25°C) for 12 hours, and the formed coating film is further dried at 35°C for 4 hours, thereby obtaining a sample piece. A water contact angle was measured in the same manner as in the case of the dry water contact angle except that the obtained sample piece was impregnated with pure water for 5 minutes, then taken out, and wiped off with a waste cloth to obtain a sample for measurement.

(Measurement of Water Content)

The coating film forming composition of each of Examples and Comparative Examples was applied to a surface of a PET base film (product name "Lumirror S10", manufactured by Toray Industries, Inc.) having a thickness of 75 $\mu$m

with an applicator, and dried at room temperature (25°C) for 12 hours. The obtained film was further dried at 35°C for 4 hours to prepare a sample having a thickness (tensile film thickness) described in Table 1, and then the obtained coating film was cut so as to have a size of 20 mm × 20 mm, and the mass was measured without peeling the coating film from the PET base. The sample was put into a glass bottle containing pure water and allowed to stand (immersed) at room temperature for 2 hours. After 2 hours, the sample was taken out, water droplets adhering to the surface were quickly wiped off, and then the mass was measured to determine the mass before and after impregnation. The mass ($W_{PET}$) of the PET base cut out so as to have a size of 20 mm × 20 mm was separately measured, and the water content was calculated by the following formula (1a).

$$\text{Formula (1a): Water content (\%)} = [(\text{Mass after impregnation} - W_{PET}) / (\text{mass before impregnation} - W_{PET})] \times 100$$

(Evaluation of Appearance)

In the measurement of the water content, the appearance of the sample taken out after immersion in pure water for 2 hours was visually observed and evaluated according to the following evaluation criteria.

1: No change.
2: The coating film was lightly whitened.
3: The coating film was whitened.
4: A change in shape of water bubbles or the like was observed on the surface of the coating film, or the coating film was intensely whitened.
5: The coating film was peeled from the PET substrate.

(Measurement of Strength at Break)

The coating film forming composition was applied to the surface of a PET film (product name: "Lumirror S10", manufactured by Toray Industries, Inc., thickness: 75 $\mu$m) with an applicator, and dried at room temperature for 12 hours. The obtained film was further dried at 35°C for 4 hours to prepare a sample having a thickness (tensile film thickness) described in Table 1, and then the sample was cut out to a size of 20 mm × 80 mm, and the strength at break was evaluated using a tensile tester (device name "AUTOGRAPH AGS-X", manufactured by Shimadzu Corporation) at an initial length of 60 mm and a tensile speed of 300 mm/min.

(Method of Measuring Adhesive Force)

A coating film was prepared by the following method, and the adhesive force was measured. The coating film forming composition was applied to a SUS plate (SUS304) with an applicator, dried at room temperature for 12 hours, and further dried at 35°C for 4 hours to prepare a sample having a thickness ($\mu$m) (peel film thickness) described in Table 2. Next, the other portions were removed so that the coating film had a size of width 20 mm × length 100 mm. Using a tensile tester (AUTOGRAPH AGS-X, manufactured by Shimadzu Corporation), the force when the coating film was peeled from the SUS plate at a peeling angle of 180° and a peeling rate of 300 mm/min was measured as the adhesive force. The adhesive force was measured twice, and the first and second measurements were defined as n1 and n2, respectively.

Using the obtained measured values of the strength at break and the adhesive force, the peeling index (tensile/peel) was determined using the following formula (2a). As the adhesive force and the film thickness (peel film thickness), average values obtained by performing measurement twice were used.

$$\text{Peeling index} = (\text{Strength at break (MPa)}) / \{\text{adhesive force (N)} / (\text{film thickness (mm)} \times \text{width (mm)})\} \dots \text{Formula (2a)}$$

For each of Examples and Comparative Examples, the materials used for the coating film forming composition and the results of each measurement and test are shown in Tables 1 and 2 below.

[Table 1]

Table 1

| | Material | | | | | | | | |
| | Resin | | | Surfactant | | | Crosslinking agent | | |
| | Manufacturer | Product name | Parts | Manufacturer | Product name | Parts | Manufacturer | Product name | Parts |
| Example 1 | Dai-ichi Kogyo Seivaku | SF-470 | 100 | Momentive | Silwet L7600 | 3 | Nisshinbo Chemical | V-10 | 3 |
| Example 2 | Dai-ichi Kogyo Seivaku | SF-470 | 100 | Momentive | Silwet L7600 | 7 | Nisshinbo Chemical | V-10 | 3 |
| Example 3 | Mitsui Chemicals | WS-6021 | 100 | Momentive | Silwet L7600 | 3 | Nisshinbo Chemical | V-10 | 3 |
| Example 4 | Mitsui Chemicals | WS-6021 | 100 | Momentive | Silwet L7600 | 10 | Nisshinbo Chemical | V-10 | 3 |
| Example 5 | Dai-ichi Kogyo Seivaku | SF-470 | 100 | Momentive | Silwet L7607 | 3 | Nisshinbo Chemical | V-10 | 3 |
| Example 6 | Dai-ichi Kogyo Seivaku | SF-470 | 100 | Momentive | Silwet L7600 | 3 | Mitsui Chemicals | WD725 | 5 |
| Example 7 | Dai-ichi Kogyo Seivaku | SF-470 | 100 | Sigma Aldrich | Triton X-45 | 3 | Nisshinbo Chemical | V-10 | 3 |
| Example 8 | Dai-ichi Kogyo Seivaku | SF-470 | 100 | Sigma Aldrich | Triton X-100 | 3 | Nisshinbo Chemical | V-10 | 3 |
| Example 9 | Dai-ichi Kogyo Seivaku | SF-470 | 100 | Momentive | Silwet L7607 | 0.1 | Nisshinbo Chemical | V-10 | 3 |
| Example 10 | Dai-ichi Kogyo Seivaku | SF-470 | 100 | Momentive | Silwet L7607 | 0.1 | Mitsui Chemicals | WD725 | 5 |
| Comparative Example 1 | Dai-ichi Kogyo Seivaku | SF-470 | 100 | | | | Nisshinbo Chemical | V-10 | 3 |
| Comparative Example 2 | Dai-ichi Kogyo Seivaku | SF-470 | 100 | Momentive | Silwet L7600 | 20 | Nisshinbo Chemical | V-10 | 3 |
| Comparative Example 3 | Mitsui Chemicals | WS-6021 | 100 | Momentive | Silwet L7600 | 20 | Nisshinbo Chemical | V-10 | 3 |

(continued)

| | Material | | | | | | | | |
|---|---|---|---|---|---|---|---|---|---|
| | Resin | | | Surfactant | | | Crosslinking agent | | |
| | Manufacturer | Product name | Parts | Manufacturer | Product name | Parts | Manufacturer | Product name | Parts |
| Comparative Example 4 | Dai-ichi Kogyo Seivaku | SF-420 | 100 | Momentive | Silwet L7600 | 10 | Nisshinbo Chemical | V-10 | 3 |
| Comparative Example 5 | Dai-ichi Kogyo Seivaku | SF-170 | 100 | Momentive | Silwet L7600 | 3 | Nisshinbo Chemical | V-10 | 3 |
| Comparative Example 6 | Dai-ichi Kogyo Seivaku | SF-170 | 100 | Momentive | Silwet L7600 | 10 | Nisshinbo Chemical | V-10 | 3 |
| Comparative Example 7 | DIC | WLS-210 | 100 | Shin-Etsu Chemical | KF6013 | 6 | Nisshinbo Chemical | V-10 | 3 |
| Comparative Example 8 | Mitsui Chemicals | WS-6021 | 100 | Shin-Etsu Chemical | KF6013 | 6 | Nisshinbo Chemical | V-10 | 3 |

[Table 2]

Table 2

| | Water contact angle | | Water resistant | | Peeling index | Tensile test | | Peel test | | | |
|---|---|---|---|---|---|---|---|---|---|---|---|
| | dry-WCA [°] | wet-WCA [°] | Water content | Appearance | Tension/ peel | Strength at break [MPa] | Tensile film thickness [μm] | Adhesive force [N/20mm] | | Peel film thickness [μm] | |
| | 5 min | 5 min | | | | | | n1 | n2 | n1 | n2 |
| Example 1 | <5 | <5 | 104.7% | 1 | 46.1 | 39.4 | 66.0 | 2.4 | 1.9 | 144 | 109 |
| Example 2 | <5 | <5 | 107.0% | 2 | 43.4 | 28.0 | 59.7 | 1.3 | 1.3 | 103 | 105 |
| Example 3 | <5 | <5 | 104.4% | 1 | 24.5 | 32.5 | 57.7 | 2.1 | 1.9 | 75 | 78 |
| Example 4 | <5 | <5 | 107.3% | 2 | 21.1 | 24.3 | 57.0 | 3.4 | 3.0 | 150 | 125 |
| Example 5 | <5 | <5 | 105.2% | 1 | 38.8 | 38.6 | 59.3 | 2.5 | 2.6 | 142 | 115 |
| Example 6 | <5 | 7 | 106.2% | 1 | 34.5 | 49.4 | 61.7 | 3.1 | 3.4 | 103 | 125 |
| Example 7 | <5 | <5 | 104.6% | 1 | 34.4 | 29.4 | 65.7 | 3.4 | 3.1 | 184 | 198 |
| Example 8 | <5 | 6 | 106.0% | 2 | 26.6 | 38.0 | 66.0 | 2.6 | 2.5 | 91 | 87 |
| Example 9 | <5 | 14 | 104.5% | 1 | 31.2 | 41.8 | 62.0 | 3.8 | 3.6 | 142 | 134 |
| Example 10 | <5 | 16 | 105.6% | 1 | 16.6 | 39.6 | 54.0 | 5.4 | 5.1 | 108 | 113 |
| Comparative Example 1 | <5 | 28 | 103.9% | 1 | 54.5 | 41.7 | 55.0 | 3.0 | 2.7 | 195 | 172 |
| Comparative Example 2 | <5 | <5 | 112.6% | 4 | 168.0 | 26.8 | 56.7 | 0.6 | 0.6 | 195 | 184 |
| Comparative Example 3 | <5 | <5 | 115.0% | 4 | 29.9 | 16.5 | 60.0 | 2.1 | 1.4 | 176 | 133 |
| Comparative Example 4 | <5 | 48 | 111.1% | 3 | 28.5 | 23.0 | 59.0 | 1.8 | 2.7 | 116 | 163 |
| Comparative Example 5 | 48 | 51 | 148.8% | 5 | 4.1 | 20.5 | 60.7 | 12.9 | 17.8 | 128 | 178 |
| Comparative Example 6 | <5 | 54 | 129.1% | 5 | 9.4 | 22.6 | 61.0 | 7.2 | 8.5 | 158 | 167 |

(continued)

| | Water contact angle | | Water resistant | | Peeling index | Tensile test | | Peel test | | | |
|---|---|---|---|---|---|---|---|---|---|---|---|
| | dry-WCA [°] 5 min | wet-WCA [°] 5 min | Water content | Appearance | Tension/ peel | Strength at break [MPa] | Tensile film thickness [μm] | Adhesive force [N/ 20mm] n1 | n2 | Peel film thickness [μm] n1 | n2 |
| Comparative Example 7 | 54 | 68 | 111.6% | 2 | 76.0 | 32.1 | 55.7 | 1.5 | 1.6 | 191 | 174 |
| Comparative Example 8 | 9 | 58 | 105.9% | 2 | 36.7 | 31.7 | 56.0 | 3.6 | 3.5 | 202 | 213 |

[Resin]

- SF-470 (manufactured by Dai-ichi Kogyo Seiyaku Co., Ltd., Superflex 470, carbonate-based urethane)
- WLS-210 (manufactured by DIC Corporation, carbonate-based urethane polymer)
- SF-420 (manufactured by Dai-ichi Kogyo Seiyaku Co., Ltd., Superflex 420, carbonate-based urethane)
- WS-6021 (manufactured by Mitsui Chemicals, Inc., ether-based urethane)
- SF-170 (manufactured by Dai-ichi Kogyo Seiyaku Co., Ltd., Superflex 170, ester/ether-based urethane)

[Surfactant]

- Silwet L7600 (manufactured by Momentive, silicone-based surfactant)
- Silwet L7607 (manufactured by Momentive, silicone-based surfactant)
- Triton X-45 (manufactured by Sigma Aldrich, nonionic-based surfactant)
- Triton X-100 (manufactured by Sigma Aldrich, nonionic-based surfactant)
- KF6013 (manufactured by Shin-Etsu Chemical Co., Ltd., silicone-based surfactant)

[Crosslinking Agent]

- V-10 (manufactured by Nisshinbo Chemical Inc., carbodiimide-based crosslinking agent)
- WD 725 (manufactured by Mitsui Chemicals, Inc., isocyanate-based crosslinking agent)

As shown in Tables 1 and 2, the coating films of Examples 1 to 10 has a water contact angle, after the surface was washed with water, of 25° or less, and a water content, after impregnation with water at 25°C for 2 hours of, 110% or less. Therefore, the antifouling property and the water resistance were excellent. The peeling index was 2.5 or more, and the peelability was shown.

Since the coating film of Comparative Example 1 did not contain a surfactant in the composition, the water contact angle after the surface was washed with water exceeded 25°, and the antifouling effect was inferior to those of Examples.

In Comparative Examples 2 and 3 in which the content of the surfactant was larger than the content of the surfactant in Examples 2 and 4, the antifouling effect was excellent, but the water content was high, and the appearance after impregnation with water was inferior. In Comparative Examples 4 to 6 in which the type of the resin was changed, the water resistance was inferior, and in Comparative Example 5, the antifouling property was also inferior. In Comparative Examples 7 and 8 in which a silicone-based surfactant was used, the water contact angle was high, and the antifouling property was inferior.

Industrial Applicability

The coating film forming composition of the present invention can form a coating film excellent in antifouling property and water resistance.

Although the present invention has been described in detail and with reference to particular embodiments, it will be apparent to those skilled in the art that various changes and modifications can be made without departing from the spirit and scope of the invention.

The present application is based on Japanese Patent Application No. 2020-053316 filed on March 24, 2020, the contents of which are incorporated herein as reference.

REFERENCE SIGNS LIST

21 Coating film
31 Structural member

**Claims**

1. A coating film forming composition, wherein
   a coating film formed by the coating film forming composition has a water contact angle, after a surface is washed with water, of 25° or less, and a water content, after impregnation with water at 25°C for 2 hours, of 110% or less.

2. The coating film forming composition according to claim 1, wherein the coating film is a peelable coating film.

3. The coating film forming composition according to claim 1 or 2, comprising: at least one resin selected from the group consisting of a urethane-based resin, an acrylic-based resin, a styrene-based resin, and a rubber-based resin.

4. The coating film forming composition according to claim 3, further comprising: a surfactant, a crosslinking agent, a peeling agent, or a film forming aid.

5. The coating film forming composition according to claim 3, wherein the composition comprises a urethane-based resin as the resin, and further comprises a surfactant or a crosslinking agent.

6. The coating film forming composition according to claim 4 or 5, wherein the surfactant has a molecular weight of 200 to 10000.

7. The coating film forming composition according to any one of claims 4 to 6, comprising: the resin and the surfactant, wherein a content of the surfactant is 0.1 part by mass to 10 parts by mass with respect to 100 parts by mass of the resin.

8. The coating film forming composition according to any one of claims 1 to 7, wherein an adhesive force of the coating film is 2.0 N/20 mm or more.

9. The coating film forming composition according to any one of claims 1 to 8, wherein the peeling index represented by the following formula (2a) in the coating film is 2.5 or more:

$$\text{Peeling index} = (\text{Strength at break (MPa)}) / \{\text{adhesive force (N)} / (\text{film thickness (mm)} \times \text{width (mm)})\} \qquad (2a).$$

10. A coating film comprising: the coating film forming composition according to any one of claims 1 to 9.

11. A coating film having a water contact angle, after a surface is washed with water, of 25° or less, and having a water content, after impregnation with water at 25°C for 2 hours, of 110% or less.

FIG.1

21

31

## INTERNATIONAL SEARCH REPORT

International application No.

PCT/JP2021/010232

### A. CLASSIFICATION OF SUBJECT MATTER

C09D 5/20(2006.01)i; C09D 175/04(2006.01)i; C09D 201/00(2006.01)i; C09D 7/63(2018.01)i; C09D 7/65(2018.01)i
FI: C09D201/00; C09D5/20; C09D175/04; C09D7/63; C09D7/65

According to International Patent Classification (IPC) or to both national classification and IPC

### B. FIELDS SEARCHED

Minimum documentation searched (classification system followed by classification symbols)
C09D5/20; C09D175/04; C09D201/00; C09D7/63; C09D7/65

Documentation searched other than minimum documentation to the extent that such documents are included in the fields searched
Published examined utility model applications of Japan       1922–1996
Published unexamined utility model applications of Japan     1971–2021
Registered utility model specifications of Japan             1996–2021
Published registered utility model applications of Japan     1994–2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br><br>A | JP 2009-255500 A (FUJIFILM CORPORATION) 05 November 2009 (2009-11-05) claims, paragraphs [0002]-[0005], examples 1-20 | 1, 3-4, 6-8, 10-11<br>2, 5, 9 |
| X<br><br>A | JP 2009-227809 A (FUJIFILM CORPORATION) 08 October 2009 (2009-10-08) claims, paragraphs [0002]-[0011], examples 1-48 | 1, 3-4, 6-8, 10-11<br>2, 5, 9 |
| A | WO 2010/001813 A1 (FUJIFILM CORPORATION) 07 January 2010 (2010-01-07) | 1-11 |
| A | JP 2016-17116 A (3M INNOVATIVE PROPERTIES COMPANY) 01 February 2016 (2016-02-01) | 1-11 |

☒ Further documents are listed in the continuation of Box C.          ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 May 2021 (18.05.2021) | 25 May 2021 (25.05.2021) |

| Name and mailing address of the ISA/<br>Japan Patent Office<br>3-4-3, Kasumigaseki, Chiyoda-ku,<br>Tokyo 100-8915, Japan | Authorized officer |
| | Telephone No. |

Form PCT/ISA/210 (second sheet) (January 2015)

**INTERNATIONAL SEARCH REPORT**

International application No.

PCT/JP2021/010232

C (Continuation).   DOCUMENTS CONSIDERED TO BE RELEVANT

| Category* | Citation of document, with indication, where appropriate, of the relevant passages | Relevant to claim No. |
|---|---|---|
| A | JP 61-72071 A (YUHO CHEM KK) 14 April 1986 (1986-04-14) | 1-11 |
| A | JP 9-31413 A (SUNSTAR ENGINEERING INC.) 04 February 1997 (1997-02-04) | 1-11 |
| A | WO 2016/047359 A1 (FUJIFILM CORPORATION) 31 March 2016 (2016-03-31) | 1-11 |
| P, A | WO 2020/196433 A1 (NITTO DENKO CORP.) 01 October 2020 (2020-10-01) | 1-11 |
| E, A | WO 2021/060293 A1 (NITTO DENKO CORP.) 01 April 2021 (2021-04-01) | 1-11 |

Form PCT/ISA/210 (continuation of second sheet) (January 2015)

International application No.

PCT/JP2021/010232

| Patent Documents referred in the Report | Publication Date | Patent Family | Publication Date |
|---|---|---|---|
| JP 2009-255500 A | 05 Nov. 2009 | US 2011/0108262 A1 claims, paragraphs [0002]-[0011], examples 1-20 EP 2269817 A1 KR 10-2010-0127791 A CN 101980865 A | |
| JP 2009-227809 A | 08 Oct. 2009 | US 2009/0239051 A1 claims, paragraphs [0002]-[0013], examples 1-48 | |
| WO 2010/001813 A1 | 07 Jan. 2010 | (Family: none) | |
| JP 2016-17116 A | 01 Feb. 2016 | (Family: none) | |
| JP 61-72071 A | 14 Apr. 1986 | US 4622360 A EP 228481 A1 | |
| JP 9-31413 A | 04 Feb. 1997 | (Family: none) | |
| WO 2016/047359 A1 | 31 Mar. 2016 | (Family: none) | |
| WO 2020/196433 A1 | 01 Oct. 2020 | (Family: none) | |
| WO 2021/060293 A1 | 01 Apr. 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H08155383 A
- JP H09137087 A

- JP 2020053316 A